(19) Europäisches Patentamt
European Patent Office
Office européen des brevets

(11) Veröffentlichungsnummer: **0 436 111 A2**

# (12) EUROPÄISCHE PATENTANMELDUNG

(21) Anmeldenummer: **90122369.3**

(22) Anmeldetag: **23.11.90**

(51) Int. Cl.⁵: **C08L 101/00**, //(C08L101/00, 65:02)

(30) Priorität: **06.12.89 DE 3940330**
**24.01.90 DE 4001915**

(43) Veröffentlichungstag der Anmeldung:
**10.07.91 Patentblatt 91/28**

(84) Benannte Vertragsstaaten:
**DE FR GB IT**

(71) Anmelder: **BAYER AG**

**W-5090 Leverkusen 1 Bayerwerk(DE)**

(72) Erfinder: **Pakull, Ralf, Dr.**
**Neue Linner Strasse 75**
**W-4150 Krefeld(DE)**
Erfinder: **Himmler, Thomas, Dr.**
**Bonhoefferstrasse 20**
**W-5000 Köln 80(DE)**
Erfinder: **Eckhardt, Volker, Dr.**
**Bodelschwinghstrasse 14**
**W-4150 Krefeld(DE)**
Erfinder: **Karbach, Alexander, Dr.**
**Scheiblerstrasse 81**
**W-4150 Krefeld(DE)**

## (54) Mischungen aus substituierten Homopoly-p-phenylenen und Thermoplasten.

(57) Die Erfindung betrifft Mischungen aus substituierten Homo-poly-p-phenylenen und thermoplastischen Polymeren mit einer Schmelz/Erweichungstemperatur >70 °C mit ausgezeichneten mechanischen Eigenschaften und guter Verarbeitbarkeit, Verfahren zu ihrer Herstellung, sowie ihre Verwendung zur Herstellung von Formkörpern, Filamenten, Fasern und Folien.

EP 0 436 111 A2

# MISCHUNGEN AUS SUBSTITUIERTEN HOMO-POLY-P-PHENYLENEN UND THERMOPLASTEN

Die Erfindung betrifft Mischungen aus substituierten Homo-poly-p-phenylenen und thermoplastischen Polymeren mit einer Schmelz/Erweichungstemperatur von >70 °C mit ausgezeichneten mechanischen Eigenschaften und guter Verarbeitbarkeit, Verfahren zu ihrer Herstellung, sowie ihre Verwendung zur Herstellung von Formkörpern, Filamenten, Fasern und Folien.

Mischung aus thermoplastischen Polymeren mit verschiedenen steifkettigen Polymeren sind bekannt, z.B. DE-A 3 216 413, GB-A 2 008 598 und US-A 4 631 318. Solche Systeme weisen gute mechanische Eigenschaften, meist in Verbindung mit guter Fließfähigkeit auf. Nachteilig ist jedoch, daß einerseits die bisher als steifkettige Mischungspartner eingesetzten Polymere chemisch nicht inert sind. So können Polyester oder Polyamide beispielsweise hydrolytisch gespalten werden oder durch Umesterung/Umamidierung unerwünschte Reaktionen mit dem Matrixmaterial eingehen, die sich nachteilig auf die Eigenschaften der Mischung auswirken, da sie z.B. mit einem Abbau einhergehen können. Andererseits sind Polyheterocyclen wie Polybisbenzoxazole, Polybisbenzthiazole oder Polybisbenzimidazole sehr schwer zu verarbeiten. Sie sind in der Regel nur unter Zersetzung schmelzbar und nur in aggressiven Lösungsmitteln wie Methansulfonsäure löslich.

In der GB-A 2 008 598 werden Mischungen aus thermoplastischen Polymeren und u.a. unsubstituiertem Poly-p-phenylen beschrieben. Unsubstituiertes Poly-p-phenylen ist jedoch auf Grund seiner Schwerlöslichkeit und seines hohen Schmelzpunktes schwerer in Lösung oder in der Schmelze in einer Polymermatrix dispergierbar. Ein weiterer Nachteil des unsubstituierten Poly-p-phenylens ist seine starke Tendenz zur Selbstassoziation, was die Dispergierbarkeit in flexiblen Polymermatrices behindert.

Aufgabe der vorliegenden Erfindung war es daher, Mischungen aus flexiblen Thermoplasten und chemisch inerten, leicht verarbeitbaren, steifkettigen Polymeren zur Verfügung zu stellen.

Es wurde nun gefunden, daß Mischungen mit substituierten Homo-poly-p-phenylenen die geforderte Eigenschaftkombination aufweisen. Substituierte Homo-poly-p-phenylene zeichnen sich als Mischungspartner durch Stabilitat gegen Hydrolyse und eine ausgezeichnete Löslichkeit in verschiedenen Lösungsmitteln aus, so daß Mischungen mit den verschiedensten Polymeren leicht durch Lösungsmethoden herstellbar sind. Viele substituierte Homo-poly-p-phenylene sind unzersetzt schmelzbar, so daß eine Herstellung der erfindungsgemäßen Mischungen auch nach bekannten Methoden in der Schmelze erfolgen kann. Die auf diese Weise hergestellten Mischungen mit substituierten Homo-poly-p-phenylenen lassen sich aus der Schmelze verarbeiten und machen so den Einsatz von Lösungsmitteln bei der Verarbeitung überflüssig.

Substituierte Homo-poly-phenylene lassen sich vorteilhaft nach dem in der DE-A 3 821 567 beschriebenen Verfahren herstellen. Dabei werden substituierte aromatische Dichlorverbindungen, gegebenenfalls in Anwesenheit eines wasserfreien aprotischen Lösungsmitel mit metallischem Zink, Mangan oder Magnesium bei Temperaturen von 0 bis 250 °C in Anwesenheit eines geeigneten Katalysatorsystems umgesetzt.

Auch die Polymerisation von Benzol und einigen substituierten Benzolen in Gegenwart von Lewissäuren, einem Cokatalysator und einem Oxidationsmittel ist möglich (z.B. J. Polym. Sci. Part D (Macromolecular Reviews) 5 (1971) 385 bis 430).

Andere Methoden zur Herstellung von Polyarylenen sind z.B. die Wurtz-Fittig-Reaktion, in der z.B. p-Dichlorbenzol mit metallischem Natrium oder Natrium-Kalium-Legierungen umgesetzt wird, die Ullmann-Synthese, in der Dibrom-, bevorzugt Diiodarylverbindungen durch Einwirken von metallischem Kupfer polymerisiert werden.

Eine weitere Möglichkeit besteht z.B. in der Übergangsmetallkatalysierten Polymerisation der Mono-Grignard-Verbindungen von Dihalogenaromaten, z.B. der Polymerisation von p-Dibrombenzol mit Magnesium in Gegenwart von 2,2'-Bipyridyl-nickel(II)-chlorid (z.B. JP-A 52-154900) oder der Polymerisation von 1,4-Dibromnaphthalin mit Magnesium in Gegenwart von Nickel(II)acetylacetonat als Katalysator (z.B. Makromol. Chem. 184 (1983) 2241 bis 2249).

Gegenstand der Erfindung sind daher Mischungen aus thermoplastischen Polymeren mit einer Schmelz/Erweichungstemperatur >70 °C mit substituierten Poly-p-phenylenen mit wiederkehrenden Einheiten der Formel (I)

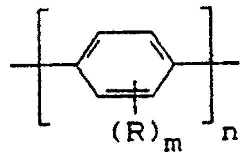

(I),

worin

R Alkylreste mit 1-18 C-Atomen, gegebenenfalls ein- oder mehrfach substituiert durch Halogen, bevorzugt Fluor, Alkoxy, Cyano, Dialkylamino, $C_6$-$C_{14}$-Arylreste, gegebenenfalls ein- oder mehrfach substituiert durch Halogen, bevorzugt Fluor, Alkoxy, Cyano, Dialkylamio, $C_1$-$C_6$-Alkoxyreste, Fluoralkylreste mit 1 oder 2 C-Atomen und 1 bis 5 Fluoratomen, $COOC_1$-$C_{18}$-Alkyl und Cycloalkylreste, gegebenenfalls ein- oder mehrfach substiutiert durch Halogen, bevorzugt Fluor, Alkoxy, Cyano, Dialkylamino, $COOC_6$-$C_{10}$-Arylreste, gegebenenfalls ein- oder mehrfach substituiert durch Halogen, bevorzugt Fluor, Alkoxy, Cyano, Dialkylamino, Fluoralkoxy mit 1 oder 2 C-Atomen und 1 bis 5 Fluoratomen, gegebenenfalls substituierte Phenoxyreste, $C_2$-$C_{16}$-Dialkylaminoreste, $C_2$-$C_{16}$-Diarylaminoreste, Diacetylaminoreste, Formylreste, Cyanoreste, -CO-$C_1$-$C_6$-Alkylreste, gegebenenfalls ein-oder mehrfach substituiert durch Halogen, bevorzugt Fluor, -CO-$C_6$-$C_{10}$-Arylreste, gegebenenfalls ein-oder mehrfach substituiert durch Halogen, bevorzugt Fluor, -$OCOC_1$-$C_{18}$-Alkylreste, gegebenenfalls ein- oder mehrfach substituiert durch Halogen, bevorzugt Fluor, -$OCOC_6$-$C_{10}$-Arylreste, gegebenenfalls ein-oder mehrfach substituiert durch Halogen, bevorzugt Fluor, -$CONR^1R^2$ mit $R^1$ und $R^2$ unabhängig voneinander gleich oder verschieden $C_1$-$C_{18}$-Alkyl, $C_6$-$C_{10}$-Aryl, $C_1$-$C_{18}$-Alkylsulfenylreste, gegebenenfalls ein- oder mehrfach substituiert durch Halogen, bevorzugt Fluor, $C_6$-$C_{10}$-Arylsulfinylreste, gegebenenfalls ein-oder mehrfach substituiert durch Halogen, bevorzugt Fluor, $C_1$-$C_{18}$-Alkylsulfonylreste, gegebenenfalls ein- oder mehrfach substituiert durch Halogen, bevorzugt Fluor,

und

m an jedem Ring jeweils 1 oder 2 sein kann,

wobei im Falle

m = 2 beide Rest R zusammen auch -CH=CH-CH=CH-, gegebenenfalls ein- oder mehrfach substituiert durch Halogen, bevorzugt Fluor, -CH=CH-$CH_2$-, gegebenenfalls ein- oder mehrfach substituiert durch Halogen, bevorzugt Fluor, -$CH_2CH_2CH_2$-, gegebenenfalls ein- oder mehrfach substituiert durch Halogen, bevorzugt Fluor, -$CH_2CH_2CH_2CH_2$-, gegebenenfalls ein- oder mehrfach substituiert durch Halogen, bevorzugt Fluor, -$OCH_2O$-, gegebenenfalls ein- oder mehrfach substituiert Halogen, bevorzugt Fluor, -$OCH_2CH_2O$-, gegebenenfalls ein- oder mehrfach substituiert durch Halogen, bevorzugt Fluor, bedeuten können

und

n eine ganze Zahl von 3 bis 1000 bedeutet.

Am Rest R mögliche Substituenten können, soweit sie Alkyl umfassen, vorzugsweise 1 bis 10 C-Atome, soweit sie Aryl umfassen, vorzugsweise 6 bis 24 C-Atome enthalten. Als Halogen sei in diesem Zusammenhang F, Cl, Br genannt.

Das Verhältnis von substituiertem Poly-p-phenylen zu Matrixpolymer beträgt 0,01 bis 0,20:0,99 bis 0,80.

Als bevorzugte substituierte Poly-p-phenylene seien genannt:

Poly-p-(carboxyalkyl)-phenylene, Poly-p-(aryloxy)phenylene, Poly-p-(alkyl)-phenylene, Poly-p-(dialkyl)-phenylen, Poly-p-(fluoralkyl)-phenylene, Poly-p-(fluoralkoxy)-phenylene genannt. Besonders bevorzugt sind Poly-p-(carboxymethyl)-phenylen, Poly-p-(carboxyoktadecyl)-phenylen, Poly-p-(carboxy-tert.-butyl)-phenylen, Poly-p-(carboxymethyl)-phenylen, Poly-p-(carboxyphenyl)-phenylen, Poly-p-(dimethyl)-phenylen, Poly-p-(di-isopropyl)-phenylen, Poly-p-(hexyl)-phenylen, Poly-p-(dihexyl)-phenylen, Poly-p-(methoxy)-phenylen, Poly-p-(trifluormethyl)-phenylen und Poly-p-(hexafluorpropoxy)-phenylen.

Die erfindungsgemäßen Mischungen lassen sich nach bekannten Methoden in der Schmelze z.B. durch Vermahlen bei höheren Temperaturen, bevorzugt 100-400 °C, besonders bevorzugt 200-350 °C, Mischen in einem geeigneten Lösungsmittel wie z.B. Methylenchlorid und Entfernen des Lösungsmittels durch Sprühtrocknung oder Verdampfung, oder durch Ausfällen aus Colösung in einem geeigneten Lösungsmittel, z.B. Methylenchlorid, oder aus einer Dispersion herstellen. Ebenso ist es möglich das Matrixpolymer in situ in Gegenwart eines Poly-p-phenylens in Lösung, Dispersion und/oder in der Schmelze herzustellen. Mit dieser Methode kann auch eine chemische Reaktion mit den Substituenten des Poly-p-phenylens unter Erhaltung des Polymerisationsgrades des Poly-p-phenylens herbeigeführt werden.

Die erfindungsgemäßen Mischungen zeigen im Vergleich mit den nicht abgemischten Thermoplasten eine bessere Fließfähigkeit und verbesserte Fließfähigkeit und verbesserte mech. Eigenschaften.

Die substituierten Homo-poly-p-phenylene können als Endgruppen Chlor oder Wasserstoff oder von Kettenabbrechern herrührende Reste tragen.

Als flexible thermoplastische Polymere mit einer Schmelz/Erweichungstemperatur >70° C, die als Mischungspartner in Frage kommen seien beispielhaft genannt Polyacrylnitril oder ein Derivat/Copolymer davon, Polyamide wie Polyamid 6, 66 oder ein Derivat/Copolymer davon, Polyester wie Polyethylenterephthalat oder Polybutylenterephthalat oder ein Derivat/Copolymer davon, Polyurethane oder ein Derivat/Copolymer davon, Polyalkylene wie Polyethylen oder Polypropylen oder ein Derivat/Copolymer davon, Polycarbonate, bevorzugt auf der Bais von Bisphenol A oder ein Derivat/Copolymer davon, Polyacetale oder ein Derivat/Copolymer davon, Polysulfone oder ein Derivat/Copolymer davon, Polysulfide wie Polyphenylensulfid oder ein Derivat/Copolymer davon, Vinylpolymere wie Polyvinylidenchlorid oder Polyvinylpyrolidon oder ein Derivat/Copolymer davon, Polymethylmethacrylat oder ein Derivat/Copolymer davon, Polystyrol oder ein Derivat/Copolymer davon, Polyvinylalkohol oder ein Derivat/Copolymer davon und Styrol-Butadien-Blockcopolymere oder ein Derivat/Copolymer davon.

Auch die Mischung mehrerer flexibler Thermoplaste mit substituierten Homo-poly-p-phenylenen ist möglich.

Die erfindungsgemäßen Mischungen können übliche Zusätze wie Fließ- und Entformungsmittel, (0-5 Gew.-%) Füll- und Verstärkungsmittel wie Talkum, Kreide und Glasfasern, organische Fasern, (0-60 Gew.-%) Pigmente wie Titandioxid und Ruß, (0-30 Gew.-%), Brandschutzmittel wie Halogenverbindungen, Antimontrioxid, (0-30 %) und Stabilisatoren wie niedermolekulare Phosphite enthalten (0-30 Gew.-%).

Die erfindungsgemäßen Mischungen können zur Herstellung von geformten Körpern, Folien, Fasern, Filamenten u.s.w. verwendet werden.

Beispiele

Beispiel 1

In einen 10 l-Dreihalskolben mit Rückflußkühler, Gasein-und auslaß und Rührer wurden folgende Substanzen eingewogen:

| | | | |
|---|---|---|---|
| 365,26 | g | = | 1,6 mol Bisphenol A |
| 424,00 | g | = | 7,2 Mol NaOH |
| 4280 | ml | = | Methylenchlorid |
| 4000 | ml | = | 2,56 mol Phosgen |
| 40,00 | g | = | Poly-p-(carboxymethyl)-phenylen |

Das Natriumhydroxid wurde zunächst im Wasser unter Stickstoffbeschleierung aufgelöst. In der entstandenen Lösung wurde das Bisphenol A aufgelöst. Nach Zugabe des Methylenchlorids wurde die Mischung unter Rühren auf 15° C abgekühlt. Anschließend wurde innerhalb von 45 min das Phosgen eingeleitet. Nach Beendigung des Einleitens wurden 1,1 ml Ethylenpiperidin zugesetzt und 45 min weitergerührt. Dazu wurde eine Lösung des vorher mit Thionylchlorid behandelten Poly-p-(carboxymethyl)-phenylens in Methylenchlorid gegeben. Der Ansatz wurde mit Phosphorsäure angesäuert und abfiltriert. Nach dem trocknen wurde der Ansatz mit Wasser gewaschen und in Methylenchlorid gelöst und in Methanol gefällt. Die Ausbeute betrug 388,4 g. Nach der Verarbeitung zu Norm prüfstäben wurden folgende Werte gemessen. (Die Werte in Klammern gelten für Standard Polycarbonat aus Bisphenol A):

| | |
|---|---|
| Zug/E/Modul [MPa]: | 3350 (2300) |
| Reißfestigkeit [MPa]: | 77 (> 65) |
| Schlagzähigkeit [kJ/m$^2$]: | nicht gebrochen (nicht gebrochen) |

Beispiele 2-4

15 g Bisphenol A Polycarbonat wurden in 100 ml Methylenchlorid gelöst. Dazu wurde jeweils eine Lösung von 1,5 g substituiertem Poly-p-phenylen gegeben. Die vereinigten Lösungen wurden auf ein

Volumen von ca. 10-20 ml eingeengt. Auf einer Filmziehbank konnten in allen Fällen mechanisch belastbare, reißfeste Filme enthalten werden.

Folgende substituierte Poly-p-phenylene wurden eingesetzt:

Beispiel 2: Poly-p-(carboxyoktadecyl)-phenylen
Beispiel 3: Poly-p-(carboxy-tert.-butyl)-phenylen
Beispiel 4: Poly-p-(carboxyphenyl)-phenylen

Beispiele 5-7

15 g eines thermoplastisch verarbeitbaren Polymeren wurden in 100 ml Methylenchlorid, gegebenfalls unter Zusatz von Trifluoressigsäure, gelöst. Dazu wurde jeweils eine Lösung von 1,5 Poly-p-(carboxymethyl)-phenylen gegeben. Die vereinigten Lösungen wurden auf ein Volumen von ca. 10-20 ml eingeengt. Auf einer Filmziehbank konnten in allen Fällen mechanisch belastbare, reißfeste Folien erhalten werden.

Folgende thermoplastisch verarbeitbare Polymere wurden eingesetzt:

Beispiel 5: Polymethacrylsäuremethylester
Beispiel 6: Polyethersulfon
Beispiel 7 : Polyethylenterephthalat

## Ansprüche

**1.** Mischungen aus thermoplastischen Polymeren mit einer Schmelz/Erweichungstemperatur >70° C mit substituierten Homo-Poly-p-phenylenen mit wiederkehrenden Einheiten der Formel (I)

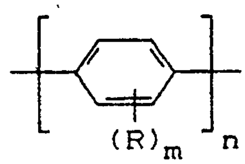 (I),

worin

R Alkylreste mit 1-18 C-Atomen, gegebenenfalls ein-oder mehrfach substituiert durch Halogen, Alkoxy, Cyano, Dialkylamino, $C_6$-$C_{14}$-Arylreste, gegebenenfalls ein- oder mehrfach substituiert durch Halogen, Alkoxy, Cyano, Dialkylamio, $C_1$-$C_6$-Alkoxyreste, Fluoralkylreste mit 1 oder 2 C-Atomen und 1 bis 5 Fluoratomen, $COOC_1$-$C_{18}$-Alkyl und Cycloalkylreste, gegebenenfalls ein- oder mehrfach substiutiert durch Halogen, Alkoxy, Cyano, Dialkylamino, $COOC_6$-$C_{10}$-Arylreste, gegebenenfalls ein- oder mehrfach substituiert durch Halogen, Alkoxy, Cyano, Dialkylamino, Fluoralkoxy mit 1 oder 2 C-Atomen und 1 bis 5 Fluoratomen, gegebenenfalls substituierte Phenoxyreste, $C_2$-$C_{16}$-Dialkylaminoreste, $C_2$-$C_{16}$-Diarylaminoreste, Diacetylaminoreste, Formylreste, Cyanoreste, $-CO-C_1$-$C_6$-Alkylreste, gegebenenfalls ein- oder mehrfach substituiert durch Halogen, $-CO-C_6$-$C_{10}$-Arylreste, gegebenenfalls ein- oder mehrfach substituiert durch Halogen, $-OCOC_1$-$C_{18}$-Alkylreste, gegebenenfalls ein- oder mehrfach substituiert durch Halogen, $-OCOC_6$-$C_{10}$-Arylreste, gegebenenfalls ein- oder mehrfach substituiert durch Halogen, $-CONR^1R^2$ mit $R^1$ und $R^2$ unabhängig voneinander gleich oder verschieden $C_1$-$C_{18}$-Alkyl, $C_6$-$C_{10}$-Aryl, $C_1$-$C_{18}$-Alkylsulfenylreste, gegebenenfalls ein- oder mehrfach substituiert durch Halogen, $C_6$-$C_{10}$-Arylsulfinylreste, gegebenenfalls ein- oder mehrfach substituiert durch Halogen, $C_1$-$C_{18}$-Alkylsulfonylreste, gegebenenfalls ein- oder mehrfach substituiert durch Halogen,

und

m an jedem Ring jeweils 1 oder 2 sein kann,

wobei im Falle

m = 2 beide Rest R zusammen auch $-CH=CH-CH=CH-$, gegebenenfalls ein- oder mehrfach substituiert durch Halogen, $-CH=CH-CH_2-$, gegebenenfalls ein- oder mehrfach substituiert durch Halogen, $-CH_2CH_2CH_2-$, gegebenenfalls ein- oder mehrfach substituiert durch Halogen, $-CH_2CH_2CH_2CH_2-$ gegebenenfalls ein- oder mehrfach substituiert durch Halogen, $-OCH_2O-$, gegebenenfalls ein- oder mehrfach substituiert Halogen, $-OCH_2CH_2O-$, gegebenenfalls ein- oder mehrfach substituiert durch Halogen, bedeuten können

und
n eine ganze Zahl von 3 bis 1000 bedeutet.

2. Mischungen nach Anspruch 1, dadurch gekennzeichnet, daß das substituierte Homo-poly-p-phenylen, Poly-p-(carboxyalkyl)-phenylen, Poly-p-(aryloxy)-phenylen, Poly-p-(fluoralkyl)-phenylen, Poly-p-(dimethyl)-phenylen, Poly-p-(di-iso-propyl)-phenylen, Poly-p-(methoxy)-phenylen, Poly-p-(carboxymethyl)-phenylen, Poly-p-(carboxy-tert.-butyl)-phenylen, Poly-p-(carboxyoktadecyl)-phenylen, Poly-p-(carboxyphenyl)-phenylen und/oder Poly-p-(trifluormethyl)-phenylen ist.

3. Mischungen nach Anspruch 1, dadurch gekennzeichnet, daß das Verhältnis von Homo-poly-p-phenylen zu Matrixpolymer 0,01 bis 0,2:0,99 bis 0,80 beträgt.

4. Verwendung der Mischungen nach Anspruch 1 zur Herstellung von geformten Körpern, Folien, Fasern und Filamenten.

5. Verfahren zur Herstellung der Mischungen nach Anspruch 1 aus Lösung oder aus der Schmelze durch Vermahlen/Kneten.